# EUROPÄISCHE PATENTANMELDUNG

(11) **EP 2 639 485 A2**
(43) Veröffentlichungstag der Anmeldung: **18.09.2013**
(21) Anmeldenummer: 13159379.0
(22) Anmeldetag: 15.03.2013
(51) Int. Cl.: F16K 41/10, F16K 17/04

(54) **Kühlsystem eines Kraftfahrzeugs, Verfahren zum Betrieb des Kühlsystems und Ventil für ein Kühlsystem eines Kraftfahrzeugs**

(30) Priorität: 16.03.2012 DE 102012005347
(71) Anmelder: VERITAS AG, 63571 Gelnhausen (DE)
(72) Erfinder: Romaker, Dirk, 38378 Warberg (DE); Beyer, Bernd, 38104 Braunschweig (DE); Desch, Christian, 63599 Biebergemünd (DE); Emmerling, Alexander, 61118 Bad Vilbel (DE)
(74) Vertreter: Grünecker, Kinkeldey, Stockmair & Schwanhäusser

(57) **Zusammenfassung**

Die Erfindung betrifft ein Ventil für ein Kühlsystem eines Kraftfahrzeugs, umfassend ein Gehäuse (2), wenigstens einen Ventilkörper (3) und wenigstens einen Kühlmittelkanal, wobei das Ventil zwischen einer Verschlussstellung, in welcher der Ventilkörper (3) den Kühlmittelkanal versperrt, und einer Öffnungsstellung, in welcher der Ventilkörper (3) den Kühlmittelkanal freigibt, überführbar ist, wobei der Ventilkörper (3) über eine flexible Balgdichtung (5) gegenüber dem Gehäuse (2) abgedichtet ist. Um die Herstellungskosten des Ventils bei mindestens gleichbleibender Lebensdauer gegenüber einem herkömmlichen Ventil zu verringern, ist erfindungsgemäß vorgesehen, dass sich die flexible Balgdichtung (5) in der Öffnungsstellung des Ventils an einem Anschlag (20) abstützt, oder dass die flexible Balgdichtung (5) kraftschlüssig und/oder formschlüssig am Gehäuse (2) und/oder am Ventilkörper (3) festgelegt ist. Die Erfindung betrifft ebenso ein Kühlsystem eines Kraftfahrzeugs, bei dem dieses Ventil zum Einsatz kommen kann sowie ein Verfahren zum Betrieb dieses Kühlsystems, wobei ein Ausgleichsbehälter von einem Kühlmittelkreislauf abkoppelbar ist bzw. zumindest vorübergehend abgekoppelt wird.

## Beschreibung

Die Erfindung betrifft ein Kühlsystem eines Kraftfahrzeugs, ein Verfahren zum Betrieb dieses Kühlsystems sowie ein Ventil für ein Kühlsystem eines Kraftfahrzeugs.

Ein herkömmliches Ventil für ein Kühlsystem eines Kraftfahrzeugs umfasst ein Gehäuse, einen Ventilkörper und einen Kühlmittelkanal, wobei das Ventil zwischen einer Verschlussstellung, in welcher der Ventilkörper den Kühlmittelkanal versperrt, und einer Öffnungsstellung, in welcher der Ventilkörper den Kühlmittelkanal freigibt, überführbar ist, wobei der Ventilkörper über eine flexible Balgdichtung gegenüber dem Gehäuse abgedichtet ist.

Bei dem gattungsgemäßen Ventil ist die Balgdichtung derart ausgelegt, um der hohen statischen Belastung standzuhalten, die durch die Druckdifferenz diesseits und jenseits der Balgdichtung entsteht. Außerdem sind die Klebeverbindungen zwischen der Balgdichtung und dem Gehäuse oder zwischen der Balgdichtung und dem Ventilkörper beständig gegenüber dem Kühlmittel ausgelegt, das auf die Klebeverbindungen einwirkt. Durch derartige Anforderungen steigen die Herstellungskosten des Ventils.

Der Erfindung liegt die Aufgabe zugrunde, die Herstellungskosten des Ventils bei mindestens gleichbleibender Lebensdauer gegenüber einem gattungsgemäßen Ventil zu verringern.

Zur Lösung dieser Aufgabe stellt die Erfindung ein Ventil für ein Kühlsystem eines Kraftfahrzeugs nach Anspruch 1 bereit, umfassend ein Gehäuse, wenigstens einen Ventilkörper und wenigstens einen Kühlmittelkanal, wobei das Ventil zwischen einer Verschlussstellung, in welcher der Ventilkörper den Kühlmittelkanal versperrt, und einer Öffnungsstellung, in welcher der Ventilkörper den Kühlmittelkanal freigibt, überführbar ist, wobei der Ventilkörper über eine flexible Balgdichtung gegenüber dem Gehäuse abgedichtet ist, wobei sich die flexible Balgdichtung in der Öffnungsstellung des Ventils an einem Anschlag abstützt. Dabei wird eine Druckkraft aufgrund der Druckdifferenz zwischen Unterdruck- und Überdruckseite der Balgdichtung durch den Anschlag aufgenommen und die Balgdichtung entlastet. Im Ergebnis wird der Verschleiß der Balgdichtung verringert und die Lebensdauer des gattungsgemäßen Ventils erheblich erhöht.

Ein nebengeordneter Aspekt der Erfindung betrifft ein Ventil für ein Kühlsystem eines Kraftfahrzeugs nach Anspruch 2, umfassend ein Gehäuse, wenigstens einen Ventilkörper und wenigstens einen Kühlmittelkanal, wobei das Ventil zwischen einer Verschlussstellung, in welcher der Ventilkörper den Kühlmittelkanal versperrt, und einer Öffnungsstellung, in welcher der Ventilkörper den Kühlmittelkanal freigibt, überführbar ist, wobei der Ventilkörper über eine flexible Balgdichtung gegenüber dem Gehäuse abgedichtet ist, wobei die flexible Balgdichtung kraftschlüssig und/oder formschlüssig am Gehäuse und/oder am Ventilkörper festgelegt ist. Dieses Ventil hat den Vorteil, dass die Balgdichtung nicht geklebt werden muss. Dies ist insbesondere von Bedeutung, da bei den herkömmlichen Ventilen Glykol die Verklebungen angreift. Mit der kraft- und/oder formschlüssigen Befestigung der Balgdichtung am Ventilgehäuse und/oder am Ventilkörper wird die Lebensdauer des Ventils ebenfalls erhöht.

Bevorzugte Weiterbildungen der Erfindung sind Gegenstände der Unteransprüche.

Es kann von Vorteil sein, wenn das Ventil als Rückschlagventil oder Druckventil ausgebildet ist. Das Rückschlagventil oder Druckventil umfasst vorzugsweise eine Verengung des Kühlmittelkanals, die durch den Ventilkörper verschlossen wird, wobei der Ventilkörper von einer Feder auf die Verengung gedrückt wird, um den Kühlmittelkanal zu verschließen. Das Kühlmittel kann nicht hindurchströmen. Derartige Rückschlagventile oder Druckventile sind in der gesperrten Richtung in der Regel hermetisch dicht. Wenn das Kühlmittel entgegen der Feder auf den Ventilkörper drückt und die Kraft des Kühlmittels auf den Ventilkörper die Kraft der Feder überwiegt, kann das Kühlmittel durch das Ventil hindurchströmen. Dadurch kann auch ohne elektronische Ansteuerung des Ventils eine zuverlässige, druckabhängige Betätigung des Ventils bewerkstelligt werden.

In einer weiteren vorteilhaften Ausbildung ist das Ventil durch manuelle Betätigung zwischen der Verschlussstellung und der Öffnungsstellung überführbar. Dadurch kann das Ventil auch bei abgeschaltetem Kühlmittelumlauf und/oder ausgeschaltetem Antrieb des Kühlkreislaufs manuell von außen geöffnet werden. Dies ist von besonderem Vorteil für Instandhaltungsmaßnahmen und die erste Inbetriebnahme, da zu diesem Zeitpunkt die Funktion des Kühlkreislaufs, etwa der Betrieb der Kühlmittelpumpe oder des Antriebsaggregats, meist nicht gewollt ist oder nicht zur Verfügung steht. Durch die manuelle Betätigung des Ventils, das manuelle Abheben des Ventilkörpers, kann etwa die Bewegbarkeit des Ventilkörpers und die Durchgängigkeit des gesamten Ventils überprüft werden. Weiterhin vorteilhaft ist das manuelle Betätigen auch für den Einfüllvorgang des Kühlmittels, da durch das erfindungsgemäße Ventil keine weiteren technischen Vorrichtungen und Maßnahmen notwendig sind, um den Einfülldruck des Kühlmittels derart einzustellen, dass das Ventil druckgesteuert öffnet. Ein weiterer wichtiger Aspekt ist, dass das Ventil während der Erstbefüllung geöffnet und dadurch komplett entlüftet werden kann.

In einer vorteilhaften Weiterbildung der Erfindung erfüllt das Gehäuse wenigstens eine der nachstehenden Anforderungen:
- Das Gehäuse besteht aus wenigstens zwei Gehäuseteilen, wobei vorzugsweise wenigstens ein Gehäuseteil im Wesentlichen topfförmig ausgebildet ist und/oder wenigstens ein Gehäuseteil im Wesentlichen deckelförmig ausgebildet ist.
- Wenigstens zwei Gehäuseteile sind miteinander verschweißt, wobei eine Schweißnaht der Gehäuseteile vorzugsweise vollständig außerhalb der Balgdichtung liegt, wobei die Schweißnaht bevorzugt als Ringschweißnaht ausgebildet ist.
- Das Gehäuse umfasst wenigstens einen Aufnahmeabschnitt zur kraft- und/oder formschlüssigen Aufnahme wenigstens eines Eingriffsabschnitts der Balgdichtung, wobei der Aufnahmeabschnitt vorzugsweise durch wenigstens zwei Gehäuseteile gebildet wird und/oder als Ringkammer ausgebildet ist, wobei die Ringkammer besonders bevorzugt über einen Ringspalt zugänglich ist.
- Das Gehäuse umfasst wenigstens eine Öffnung, durch welche ein Medium, bspw. Luft, das beim Überführen des Ventils von der Verschlussstellung in die Öffnungsstellung von der Balgdichtung verdrängt wird, aus einem Innenraum des Gehäuses entweichen kann, und beim Überführen des Ventils von der Öffnungsstellung in die Verschlussstellung in den Innenraum des Gehäuses zurückströmen kann. Dadurch kann erreicht werden, dass die Balgdichtung beim Öffnen des Ventils nicht gegen einen ansteigenden Innendruck im Gehäuse arbeiten muss und sich in der Öffnungsstellung vorzugsweise vollflächig am Anschlag abstützt. Auf diese Weise kann die Balgdichtung in der Öffnungsstellung des Ventils nahezu vollständig entlastet werden. Dadurch steigt die Lebensdauer der Balgdichtung weiter an.
- Das Gehäuse umfasst wenigstens zwei Anschlussleitungen zum Anschließen des Kühlmittelkanals an eine Kühlmittelleitung und/oder einen Kühlmittelbehälter, wobei vorzugsweise wenigstens eine Anschlussleitung im Wesentlichen in axialer Richtung des Gehäuses in den Kühlmittelkanal mündet und/oder wenigstens eine Anschlussleitung im Wesentlichen in radialer Richtung des Gehäuses in den Kühlmittelkanal mündet, wobei bevorzugt wenigstens zwei Anschlussleitungen in demselben Gehäuseteil vorgesehen sind, wobei besonders bevorzugt die Anschlussleitung, die im Wesentlichen in axialer Richtung des Gehäuses in den Kühlmittelkanal mündet, koaxial zu einer Gehäuseachse ausgerichtet ist. Das Kühlmittel fließt vorzugsweise nur in einer Richtung durch das Gehäuse. Das Kühlmittel tritt bevorzugt durch die in axialer Richtung des Gehäuses in den Kühlmittelkanal mündende Anschlussleitung ein und tritt durch die in radialer Richtung des Gehäuses in den Kühlmittelkanal mündende Anschlussleitung wieder aus. Ist das Ventil geschlossen, findet kein Durchfluss statt. Das Ventil kann derart gestaltet werden, dass es ab einem bestimmten Druck öffnet und/oder ab einem bestimmten Druck schließt. Im Betrieb ist das üblicherweise der Fall, wenn das Kühlmedium erkaltet ist und somit der Druck abfällt. Die Fließrichtung bleibt dabei unverändert.
- Das Gehäuse ist im Wesentlichen zylindrisch und/oder rotationssymmetrisch ausgebildet.
- Das Gehäuse bildet den Anschlag für die Balgdichtung, wobei sich der Anschlag vorzugsweise an einer Innenwand eines Gehäuseteils, bevorzugt einer Innenwand des topfförmigen Gehäuseteils befindet.

In einer anderen vorteilhaften Weiterbildung der Erfindung erfüllt der Ventilkörper wenigstens eine der nachstehenden Anforderungen:
- Der Ventilkörper ist bewegbar im Gehäuse aufgenommen.
- Der Ventilkörper ist entlang einer geraden Bewegungslinie zwischen der Verschlussstellung und der Öffnungsstellung des Ventils bewegbar.
- Die Bewegungslinie des Ventilkörpers verläuft entlang einer Gehäuseachse.
- Der Ventilkörper besteht aus wenigstens zwei Teilen, die vorzugsweise rotationssymmetrisch ausgebildet und bevorzugt entlang einer Gehäuseachse ausgerichtet sind.
- Der Ventilkörper umfasst wenigstens einen Aufnahmeabschnitt zur kraft- und/oder formschlüssigen Aufnahme wenigstens eines Eingriffsabschnitts der Balgdichtung, wobei der Aufnahmeabschnitt vorzugsweise durch wenigstens zwei Teile des Ventilkörpers gebildet wird und/oder als Ringkammer ausgebildet ist, wobei die Ringkammer besonders bevorzugt über einen Ringspalt zugänglich ist.
- Der Ventilkörper umfasst einen Eingriffsabschnitt, der auf der von dem Kühlmittelkanal abgewandten Seite der Balgdichtung aus dem Inneren des Gehäuses nach außen hervorsteht und sich mit einem Betätigungselement zur manuellen Betätigung des Ventilkörpers im Eingriff befindet.

In einer weiteren vorteilhaften Ausbildung weist das Ventil ein Betätigungselement auf, um das Ventil durch manuelle Betätigung zwischen der Verschlussstellung und der Öffnungsstellung zu überführen, wobei das Betätigungselement vorzugsweise wenigstens eine der nachstehenden Anforderungen erfüllt:
- Das Betätigungselement ist außen am Gehäuse angeordnet.
- Das Betätigungselement ist drehbar am Gehäuse gelagert.
- Das Betätigungselement ist im Wesentlichen hohlzylindrisch ausgebildet und ist auf einen zylindrischen Teil des Gehäuses aufgesetzt.
- Das Betätigungselement ist mit dem Ventilkörper derart gekoppelt, dass der Ventilkörper durch Betätigung des Betätigungselements bewegbar ist.
- Das Betätigungselement ist mit dem Ventilkörper derart gekoppelt, dass eine Drehbewegung des Betätigungselements in eine lineare Hubbewegung des Ventilkörpers überführt wird.
- Das Betätigungselement befindet sich mit dem Ventilkörper in einem Gewindeeingriff.

Hierdurch ist das Betätigungselement derart angeordnet, dass es von außen zur Handhabung zugänglich ist. Durch die Ausbildungen kann auf geringem Bauraum für das gesamte Ventil und besonders für die Bauteile des Betätigungselements eine manuelle Betätigung realisiert werden. Durch die kleine Baugröße kann das Ventil in beengten Bauräumen angeordnet und betätigt werden. Vorzugsweise besitzt das Betätigungselement eine Art Rampe, die vergleichbar mit einer Gewindeflanke in Umfangsrichtung um die Drehachse des Betätigungselements verläuft und dabei eine Steigung aufweist. Ein Führungselement des Ventilkörpers kann gleitend an der Rampe geführt und durch die Federkraft der Federeinrichtung mit der Rampe in Eingriff gehalten werden. Die Rampe ist vorzugsweise beidseitig durch Anschläge begrenzt und erstreckt sich beispielsweise über ca. eine halbe Umfangslänge bzw. einen Bereich von ca. 120° bis 180° um die Drehachse des Betätigungselements. In der Verschlussstellung des Ventils befindet sich das Führungselement vorzugsweise an einem ersten Anschlag und in der Öffnungsstellung an einem zweiten Anschlag. Im Ergebnis kann der Ventilkörper, mittels einer Drehbewegung des Betätigungselements um dessen Drehachse, in die Öffnungsstellung überführt werden, wobei die Rampe als Kulissenführung für das Führungselement dient.

Es kann sich als nützlich erweisen, wenn der Kühlmittelkanal wenigstens eine der nachstehenden Anforderungen erfüllt:
- Der Kühlmittelkanal erstreckt sich durch das Gehäuse.
- Der Kühlmittelkanal kommuniziert mit den Anschlussleitungen.

Es kann sich aber auch als vorteilhaft erweisen, wenn die Balgdichtung wenigstens eine der nachstehenden Anforderungen erfüllt:
- Die Balgdichtung umfasst wenigstens einen gehäuseseitigen Eingriffsabschnitt, durch welchen die Balgdichtung kraft- und/oder formschlüssig am Gehäuse festgelegt ist, wobei der gehäuseseitige Eingriffsabschnitt vorzugsweise als Ringwulst ausgebildet ist und bevorzugt axial und/oder radial bezogen auf eine Mittelachse der Balgdichtung in Richtung des Gehäuses vorsteht.
- Die Balgdichtung umfasst wenigstens einen ventilkörperseitigen Eingriffsabschnitt, durch welchen die Balgdichtung kraft- und/oder formschlüssig am Ventilkörper festgelegt ist, wobei der ventilkörperseitige Eingriffsabschnitt vorzugsweise als Ringwulst ausgebildet ist und bevorzugt axial und/oder radial bezogen auf eine Mittelachse der Balgdichtung in Richtung des Ventilkörpers vorsteht.
- Die Balgdichtung umfasst wenigstens einen verformbaren Balgabschnitt, der beim Überführen des Ventils zwischen der Verschlussstellung und der Öffnungsstellung verformt wird, wobei der Balgabschnitt vorzugsweise in der Verschlussstellung des Ventils vom Anschlag beabstandet ist und sich in der Öffnungsstellung des Ventils entgegen der Verformungsrichtung beim Überführen des Ventils von der Verschlussstellung in die Öffnungsstellung am Anschlag abstützt, wobei der Balgabschnitt besonders bevorzugt in der Verschlussstellung des Ventils eine ringförmige Einschnürung bildet und/oder in der Öffnungsstellung des Ventils der Kontur des Anschlags folgt.
- Die Balgdichtung umfasst wenigstens einen gehäuseseitigen Gelenkabschnitt, der den gehäuseseitigen Eingriffsabschnitt und den Balgabschnitt gelenkig verbindet, wobei der gehäuseseitige Gelenkabschnitt vorzugsweise als ringförmiges Festkörpergelenk ausgebildet ist und bevorzugt im Bereich eines Ringspalts des Gehäuses angeordnet ist.
- Die Balgdichtung umfasst wenigstens einen ventilkörperseitigen Gelenkabschnitt, der den ventilkörperseitigen Eingriffsabschnitt und den Balgabschnitt gelenkig verbindet, wobei der ventilkörperseitige Gelenkabschnitt vorzugsweise als ringförmiges Festkörpergelenk ausgebildet ist und bevorzugt im Bereich eines Ringspalts des Ventilkörpers angeordnet ist.
- Die Balgdichtung weist im Schnitt entlang der Balgachse im Wesentlichen ein S-förmiges Wandprofil auf, wobei vorzugsweise das radial nach außen gerichtete Ende des S-Profils den gehäuseseitigen Eingriffsabschnitt bildet und der radial nach innen gerichtete Schenkel des S-Profils den ventilkörperseitigen Eingriffsabschnitt bildet.
- Die Balgdichtung ist im Wesentlichen ringförmig oder rohrförmig oder schlauchförmig ausgebildet.
- Die Balgdichtung ist aus Gummi gefertigt.
- Die Balgdichtung ist als einwelliger Balg ausgebildet.
- Die Balgdichtung befindet sich in der Verschlussstellung des Ventils in einem unverformten Zustand.
- In der Öffnungsstellung des Ventils liegt der Balgabschnitt zumindest über die Hälfte seiner axialen Länge, vorzugsweise über mehr als zwei Drittel seiner axialen Länge, bevorzugt über mehr als drei Viertel seiner axialen Länge, besonders bevorzugt vollumfänglich und/oder vollflächig am Anschlag an.
- Die Balgdichtung ist einstückig ausgebildet.
- Die Balgdichtung ist in der Verschlussstellung des Ventils von dem Anschlag beabstandet.

Die vorstehenden Merkmale zielen darauf ab, die Balgdichtung so gut wie möglich zu entlasten bzw. die statischen und dynamischen Belastungen der Balgdichtung so weit wie möglich zu verringern. Durch das Abstützen der Balgdichtung am Anschlag in der Öffnungsstellung des Ventils wird die Last aufgrund der Druckdifferenz diesseits und jenseits der Balgdichtung an den Anschlag abgeführt. Die Gelenkabschnitte sorgen für eine gezielte, minimale Verformung der Balgdichtung, so dass die Balgdichtung besonders in der Öffnungsstellung des Ventils optimal entlastet ist. Durch die Positionierung wenigstens eines der Gelenkabschnitte, vorzugsweise beider Gelenkabschnitte, im Wesentlichen in Verlängerung einer Anlagefläche des Anschlags kann sich der Balgabschnitt in der Öffnungsstellung des Ventils optimal an die Anlagefläche des Anschlags anschmiegen, so dass der Druck des Kühlmittels großflächig an die Anlagefläche des Anschlags übertragen werden kann. Durch Vergrößerung der Anlagefläche des Anschlags verringert sich die Flächenlast auf den Balgabschnitt in der Öffnungsstellung des Ventils. Durch die gezielte Positionierung wenigstens eines der Gelenkabschnitte, vorzugsweise beider Gelenkabschnitte, kann eine Verformung beim Überführen des Ventils zwischen der Verschlussstellung und der Öffnungsstellung minimiert werden.

Es kann überdies von Vorteil sein, wenn eine Federeinrichtung den Ventilkörper mit einer Federkraft beaufschlagt, wobei die Federeinrichtung wenigstens eine der nachstehenden Anforderungen erfüllt:
- Die Federeinrichtung spannt den Ventilkörper derart vor, dass der Ventilkörper den Kühlmittelkanal blockiert.
- Die Federeinrichtung beaufschlagt den Ventilkörper entlang seiner Bewegungslinie mit einer Federkraft.
- Eine Federkraft der Federeinrichtung ist derart ausgelegt, dass das Ventil bei einem Kühlmitteldruck (bspw. 0,4 bar) selbsttätig öffnet.

Ein weiterer nebengeordneter Aspekt der Erfindung betrifft ein Kühlsystem eines Kraftfahrzeugs und ein Verfahren zum Betrieb dieses Kühlsystems, vorzugsweise unter Verwendung des erfindungsgemäßen Ventils nach einer der vorangehenden Ausführungen.

Ein herkömmliches Kühlsystem eines Kraftfahrzeugs ist in zwei Kühlkreisläufe aufgeteilt, wobei ein Kühlmittelumlauf durch die Kühlkreisläufe in Abhängigkeit von der Kühlmitteltemperatur geregelt wird. In der Warmlaufphase des Motors kreist das von einer Kühlmittelpumpe angetriebene Kühlmittel bspw. nur durch den Motor, den Ausgleichsbehälter und durch den Kühler (kleiner Kühlkreislauf), um eine schnelle Erwärmung des Motors zu bewirken. Erst ab einer bestimmten Kühlmitteltemperatur werden zusätzlich die Nebenaggregate in den Kühlkreislauf einbezogen (großer Kühlkreislauf), um die Motortemperatur konstant zu halten. Für den Ausgleich systembedingter Veränderungen des Kühlmittelstandes sorgt ein Ausgleichsbehälter mit einer Flüssigkeitsreserve.

In der Warmlaufphase des Motors unterliegen die Bauteile des Kraftfahrzeugs einem erhöhten Verschleiß und der spezifische Kraftstoffverbrauch des Kraftfahrzeugs pro zurückgelegter Wegstrecke ist überdurchschnittlich hoch.

Der Erfindung liegt die Aufgabe zugrunde, ein herkömmliches Kühlsystem eines Kraftfahrzeugs dahingehend zu verbessern, dass die Warmlaufphase des Motors noch weiter verkürzt wird.

Zur Lösung dieser Aufgabe stellt die Erfindung ein Kühlsystem eines Kraftfahrzeugs nach Anspruch 10 bereit, umfassend einen Kühlmittelkreislauf und einen Ausgleichsbehälter zur Kompensation von Volumenänderungen des im Kühlmittelkreislauf zirkulierenden Kühlmittels, wobei der Ausgleichsbehälter vom Kühlmittelkreislauf zumindest vorübergehend abkoppelbar ist, wobei zur Abkopplung des Ausgleichsbehälters vom Kühlmittelkreislauf vorzugsweise das Ventil nach wenigstens einer der vorangehenden Ausführungen eingesetzt wird. Das erfindungsgemäße Ventil versperrt in der Warmlaufphase des Motors den Zugang zum Ausgleichsbehälter. Dadurch muss das darin befindliche Kühlmittel nicht erwärmt werden. Ab einem gewissen Druck öffnet das Ventil den Zugang zum Ausgleichsbehälter, so dass der Ausgleichsbehälter in den kleinen Kühlkreislauf einbezogen wird. Der große Kühlkreislauf wird erst ab einer gewissen geregelten Temperatur, unabhängig von dem Ventil gesteuert.

Noch ein weiterer nebengeordneter Aspekt der Erfindung betrifft ein Verfahren zum Betrieb des Kühlsystems eines Kraftfahrzeugs nach Anspruch 11, umfassend einen Kühlmittelkreislauf und einen Ausgleichsbehälter zur Kompensation von Volumenänderungen des im Kühlmittelkreislauf zirkulierenden Kühlmittels, wobei der Ausgleichsbehälter vom Kühlmittelkreislauf zumindest vorübergehend abkoppelbar ist, wobei der Ausgleichsbehälter in Abhängigkeit von einem Betriebszustand des Kraftfahrzeugs, vorzugsweise in Abhängigkeit der Kühlmitteltemperatur oder dem Kühlmitteldruck, vom Kühlmittelkreislauf entkoppelt und/oder mit dem Kühlmittelkreislauf gekoppelt wird, wobei der Ausgleichsbehälter vorzugsweise in einem ersten Betriebszustand des Kraftfahrzeugs von dem Kühlmittelkreislauf entkoppelt wird und in einem zweiten Betriebszustand des Kraftfahrzeugs mit dem Kühlmittelkreislauf gekoppelt wird. Bei einem herkömmlichen Kühlsystem eines Kraftfahrzeugs wird in der Aufwärmphase des Motors immer der Ausgleichsbehälter mit aufgeheizt. Nach dem erfindungsgemäßen Ventil wird der Ausgleichsbehälter bspw. während der Aufwärmphase vom Kühlkreislauf abgekoppelt, so dass sich dadurch eine schnellere Erwärmung des Motors ergibt, da die Flüssigkeitsreserve im Ausgleichsbehälter (ca. 0,75 l) zunächst nicht erwärmt werden muss. Normalerweise hat der kleine Kühlkreislauf ungefähr 4 l und der große Kühlkreislauf ungefähr 8 l. Mit der Erfindung sind während des Aufwärmens des Motors nur 3,25 l zu erwärmen. Die Menge der eingesetzten Kühlflüssigkeit ist abhängig vom Motor. Der kleine Kühlkreislauf umfasst in der Regel in etwa 40% der Kühlflüssigkeitsmenge (in Litern) des großen.

Bei kaltem Motor wird zunächst nur der kleine Kühlkreislauf genutzt, damit der Motor möglichst rasch die optimale Betriebstemperatur erreicht. Während der Aufwärmphase steigt der Druck im System. Ab ca. 0,4 bar, was einer Kühlmitteltemperatur von ungefähr 85° C entspricht, öffnet vorzugsweise ein Ventil und gibt den Zugang zum Ausgleichsbehälter frei. Das erfindungsgemäße Ventil dient vorzugsweise dazu, den Ausgleichsbehälter während der Aufwärmphase des Motors vom Kühlkreislauf abzukoppeln.

Weitere bevorzugte Weiterbildungen der Erfindung ergeben sich durch Kombinationen der Merkmale der Ansprüche mit Merkmalen aus der Beschreibung und/oder aus den Zeichnungen.

### Kurze Beschreibung der Figuren

- Fig. 1: zeigt eine Draufsicht auf das erfindungsgemäße Ventil.
- Fig. 2: zeigt einen Schnitt II-II aus Fig. 1.
- Fig. 3: zeigt einen Schnitt III-III aus Fig. 1.
- Fig. 4: zeigt ein Detail A aus Fig. 2.
- Fig. 5: zeigt ein Detail B aus Fig. 3.
- Fig. 6: zeigt eine isometrische Ansicht des erfindungsgemäßen Ventils aus Fig. 1.
- Fig. 7: zeigt eine Vorderansicht der Balgdichtung des erfindungsgemäßen Ventils aus Fig. 1, teilweise im Schnitt dargestellt.
- Fig. 8: zeigt ein Detail A aus Fig. 7.
- Fig. 9: zeigt eine isometrische Ansicht der erfindungsgemäßen Balgdichtung aus Fig. 7.
- Fig. 10: zeigt eine Draufsicht auf die Federeinrichtung des erfindungsgemäßen Ventils aus Fig. 1.
- Fig. 11: zeigt einen Schnitt XI-XI der Federeinrichtung gemäß Fig. 10.
- Fig. 12: zeigt eine Kraft-Weg-Kennlinie der Federeinrichtung gemäß Fig. 10.
- Fig. 13: zeigt ein schematisches Schaubild eines erfindungsgemäßen Kühlsystems für ein Kraftfahrzeug.
- Fig. 14: zeigt eine weitere Ausführungsform des erfindungsgemäßen Ventils in einer Schnittansicht.
- Fig. 15: zeigt eine isometrische Ansicht des erfindungsgemäßen Ventils aus Fig. 14.

### Detaillierte Beschreibung der bevorzugten Ausführungsbeispiele

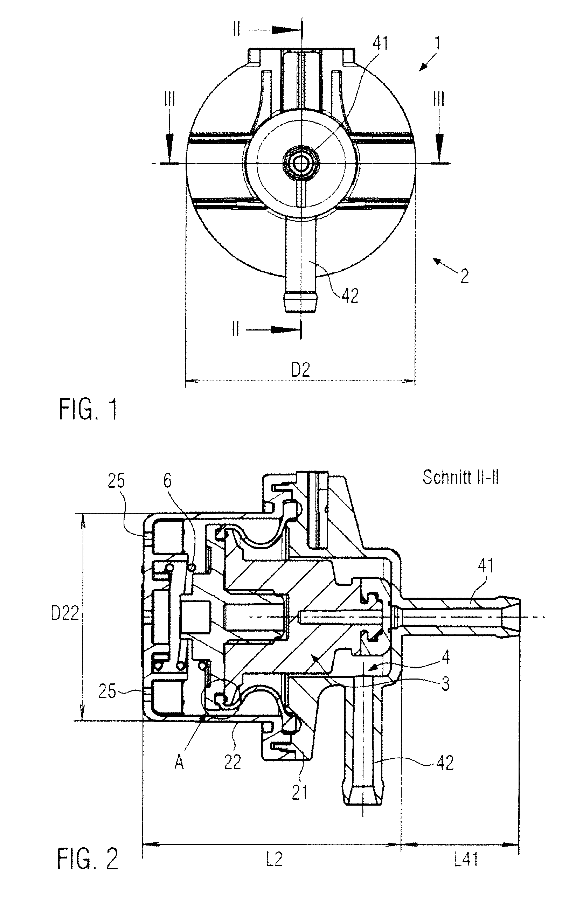

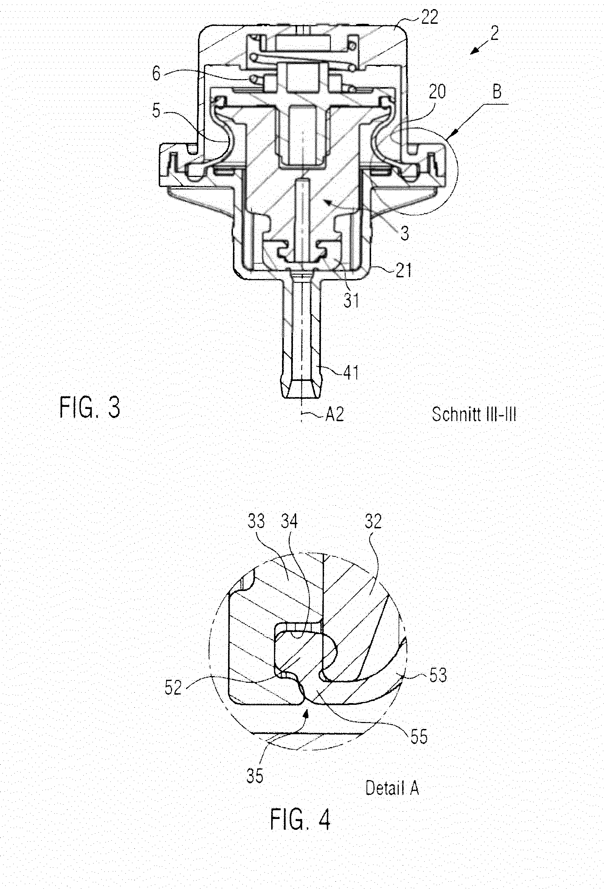

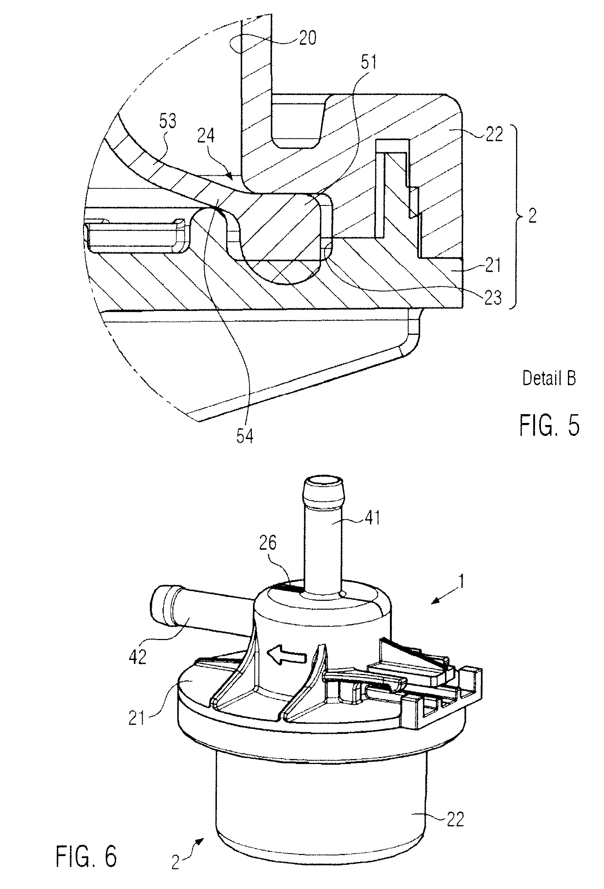

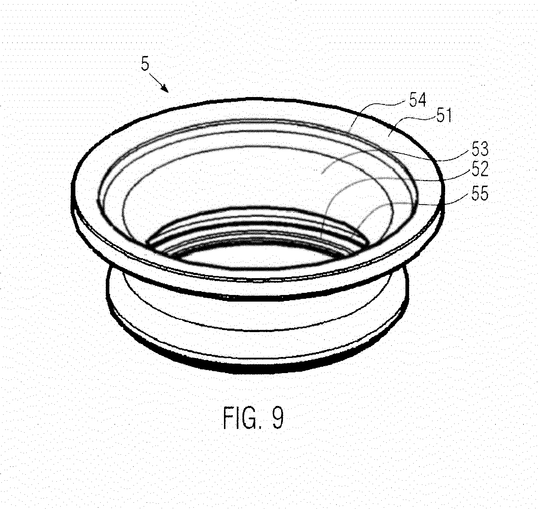

Die bevorzugten Ausführungsbeispiele der Erfindung werden nachstehend mit Bezug auf die Zeichnungen im Detail beschrieben. Eine erste Ausführungsform ist in Fig. 1-13 gezeigt.

Das erfindungsgemäße Ventil 1 ist als Rückschlagventil oder Druckventil zur Abkopplung eines Ausgleichsbehälters 12 von einem Kühlmittelkreislauf 11 im Kühlsystem 10 eines Kraftfahrzeugs ausgelegt und umfasst ein Gehäuse 2, einen Ventilkörper 3 und einen Kühlmittelkanal 4, wobei das Ventil 1 zwischen einer Verschlussstellung, in welcher der Ventilkörper 3 den Kühlmittelkanal 4 versperrt, und einer Öffnungsstellung, in welcher der Ventilkörper 3 den Kühlmittelkanal 4 freigibt, überführbar ist. Der Ventilkörper 3 ist über eine flexible Balgdichtung 5, die sich erfindungsgemäß in der Öffnungsstellung des Ventils 1 an einem Anschlag 20 abstützt und/oder kraftschlüssig und/oder formschlüssig am Gehäuse und/oder am Ventilkörper festgelegt ist, gegenüber dem Gehäuse 2 abgedichtet.

Das Gehäuse 2 besteht aus wenigstens zwei verschweißten Gehäuseteilen 21, 22, wobei ein Gehäuseteil 22 im Wesentlichen topfförmig und das andere Gehäuseteil 21 im Wesentlichen deckelförmig ausgebildet ist. Das Gehäuse 2 ist im Wesentlichen zylindrisch und rotationssymmetrisch aufgebaut. Der Anschlag 20 befindet sich an einer Innenwand des topfförmigen Gehäuseteils 22. Eine Ringschweißnaht der Gehäuseteile 21, 22 liegt vollständig außerhalb der Balgdichtung 5, so dass die Schweißnaht nicht mit dem Kühlmittel in Kontakt kommt. Die Gehäuseteile 21, 22 bilden u. a. eine Ringkammer 23 zur kraft- und formschlüssigen Aufnahme eines Eingriffsabschnitts 51 der Balgdichtung 5, wobei die Ringkammer 23 über einen Ringspalt 24 zugänglich ist.

Am Boden des topfförmigen Gehäuseteils 22 sind Öffnungen 25 vorgesehen, durch welche Luft, die beim Überführen des Ventils 1 von der Verschlussstellung in die Öffnungsstellung von der Balgdichtung 5 verdrängt wird, aus einem Innenraum des Gehäuses 2 entweichen kann, und beim Überführen des Ventils 1 von der Öffnungsstellung in die Verschlussstellung in den Innenraum des Gehäuses 2 zurückströmen kann.

Der deckelförmige Gehäuseteil 21 umfasst eine Anschlussleitung 41 zum Anschließen des Kühlmittelkanals 4 an den Kühlmittelkreislauf 11 und eine Anschlussleitung 42 zum Anschließen des Kühlmittelkanals 4 an den Ausgleichsbehälter 12. Die Anschlussleitung 41 für den Kühlmittelkreislauf 11 mündet in axialer Richtung des Gehäuses 2 in den Kühlmittelkanal 4 und steht koaxial zu einer Gehäuseachse 2 vom deckelförmigen Gehäuseteil 21 hervor. Die Anschlussleitung 42 für den Ausgleichsbehälter 12 mündet in radialer Richtung des Gehäuses 2 in den Kühlmittelkanal 4 und steht radial zu der Gehäuseachse 2 vom deckelförmigen Gehäuseteil 21 hervor. Die Mündung der Anschlussleitung 41 wird in der Verschlussstellung des Ventils 1 durch den Ventilkörper 3 blockiert. Am Gehäuse 2 können eine Markierung 26 als Ausrichtungshilfe bei der Befestigung einer Kühlmittelleitung zur Kontrolle der Stellung des Ventils 1 vorgesehen sein. Das Gehäuse 2 bzw. die Gehäuseteile 21, 22 bestehen vorzugsweise aus Kunststoff und/oder Metall.

Das Gehäuse 2 umfasst bspw. einen maximalen Durchmesser D2 von ca. 63 mm und einen Durchmesser D22 des topfförmigen Gehäuseteils 22 von ca. 46 mm bei einer Länge L2 von ca. 56 mm, wobei die Anschlussleitung 41 über eine Länge L41 von ca. 26 mm vom deckelförmigen Gehäuseteil 21 vorsteht.

Der Ventilkörper 3 besteht aus mehreren Teilen 31, 32, 33, vorzugsweise aus Kunststoff und/oder Metall. Die Teile 31, 32, 33 des Ventilkörpers 3 sind rotationssymmetrisch ausgebildet und entlang einer Gehäuseachse ausgerichtet. Eine Ringkammer 34 zur kraft- und formschlüssigen Aufnahme eines Eingriffsabschnitts 52 der Balgdichtung 5 wird durch zwei Teile 32, 33 des Ventilkörpers 3 gebildet, wobei die Ringkammer 34 über einen Ringspalt 35 zugänglich ist. Der Ventilkörper 3 ist entlang einer geraden Bewegungslinie 31, die entlang der Gehäuseachse verläuft, zwischen der Verschlussstellung und der Öffnungsstellung des Ventils 2 bewegbar im Gehäuse 2 aufgenommen.

Die Balgdichtung 5 ist einstückig als einwelliger Gummibalg ausgebildet und befindet sich in der Verschlussstellung des Ventils 1 in einem unverformten Zustand. Im Schnitt entlang der Balgachse weist die Balgdichtung 5 im Wesentlichen ein S-förmiges Wandprofil auf, wobei vorzugsweise das radial nach außen gerichtete Ende des S-Profils einen gehäuseseitigen Eingriffsabschnitt 51 bildet und der radial nach innen gerichtete Schenkel des S-Profils einen ventilkörperseitigen Eingriffsabschnitt 52 bildet. Die Eingriffsabschnitte 51, 52 sind als Ringwülste ausgebildet und kraft- und formschlüssig in den Ringkammern 23, 34 des Gehäuses 2 bzw. des Ventilkörpers 3 festgelegt. Ein verformbarer Balgabschnift 53 der Balgdichtung 5 wird beim Überführen des Ventils 1 zwischen der Verschlussstellung und der Öffnungsstellung verformt. In der Verschlussstellung des Ventils 1 ist der Balgabschnitt 53 vom Anschlag 20 beabstandet und in der Öffnungsstellung des Ventils 1 stützt sich der Balgabschnitt 53 entgegen der Verformungsrichtung (bzw. in radialer Richtung oder entgegen der Richtung des Verformens beim Überführen des Ventils 1 von der Verschlussstellung in die Öffnungsstellung) unterdruckseitig am Anschlag 20 ab. Die Verformungsrichtung des Balgabschnitts 53 verläuft im vorliegenden Fall radial nach außen in Bezug auf die Balgachse. In der Verschlussstellung des Ventils 1 ist der Balgabschnitt 53 unverformt und bildet eine ringförmige Einschnürung. Beim Überführen des Ventils 1 in die Öffnungsstellung wird die ringförmige Einschnürung unter dem Einfluss des von innen auf den Balgabschnitt 53 wirkenden Kühlmittels verringert. Der zunehmende Druck des Kühlmittels bewirkt die Verformung bzw. radiale Aufweitung des Balgabschnitts 53, bis der Balgabschnitt 53 an der Innenwand des topfförmigen Gehäuseteils 22 flächig oder sogar vollflächig in Anlage kommt und der Kontur des Anschlags 20 folgt.

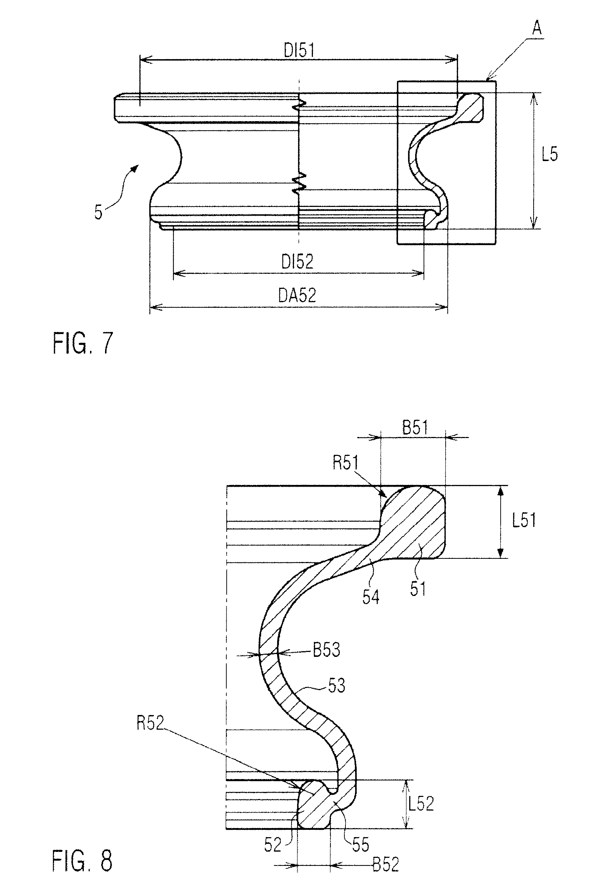

Die Balgdichtung 5 ist anschaulich in den Fig. 7 bis 9 dargestellt. In der bevorzugten Ausführung der Balgdichtung 5 beträgt der Außendurchmesser DA52 des ventilkörperseitigen Eingriffsabschnitts 52 ca. 41 mm, der Innendurchmesser DI51 des gehäuseseitigen Eingriffsabschnitts 51 ca. 43 mm, der Innendurchmesser DI52 des ventilkörperseitigen Eingriffsabschnitts 52 ca. 34 mm, die Länge L5 der Balgdichtung 5 ca. 19 mm, die Länge L51 des gehäuseseitigen Eingriffsabschnitts 51 ca. 4 mm, die Länge L52 des ventilkörperseitigen Eingriffsabschnitts 52 ca. 3 mm, die Breite/Dicke B51 des gehäuseseitigen Eingriffsabschnitts 51 ca. 4 mm, die Breite/Dicke B52 des ventilkörperseitigen Eingriffsabschnitts 52 ca. 2 mm, der Radius R51 des gehäuseseitigen Eingriffsabschnitts 51 ca. 2 mm, der Radius R52 des ventilkörperseitigen Eingriffsabschnitts 52 ca. 1 mm und die Breite/Dicke B53 des Balgabschnitts 53 ca. 1 mm.

Beim Überführen des Ventils 1 zwischen der Verschlussstellung und der Öffnungsstellung werden der gehäuseseitige Eingriffsabschnitt 51 und der Balgabschnitt 53 über einen gehäuseseitigen Gelenkabschnitt 54 gegeneinander verschwenkt, wobei der gehäuseseitige Gelenkabschnitt 54 den gehäuseseitigen Eingriffsabschnitt 51 und den Balgabschnitt 53 als ringförmiges Festkörpergelenk gelenkig verbindet und im Bereich des Ringspalts 24 des Gehäuses 2 in Verlängerung einer Anlagefläche des Anschlags 20 angeordnet ist. Gleiches geschieht auf Seiten des ventilkörperseitigen Eingriffsabschnitts 52, der über den ventilkörperseitigen Gelenkabschnitt 55 gegenüber dem Balgabschnitt 53 verschwenkt wird. Der ventilkörperseitige Gelenkabschnitt 54 ist ebenso als ringförmiges Festkörpergelenk ausgebildet und im Bereich des Ringspalts 35 des Ventilkörpers 3 im Wesentlichen in Verlängerung einer Anlagefläche des Anschlags 20 angeordnet. In der Öffnungsstellung des Ventils 1 bildet der Balgabschnitt 53 näherungsweise einen zylindrischen Schlauchabschnitt und erstreckt sich damit auf kürzestem Wege zwischen den beiden Gelenkabschnitten 54, 55, wobei der Balgabschnitt 53 an der Innenwand des topfförmigen Gehäuseteils 22 vollumfänglich und/oder vollflächig anliegt und radial außenseitig abgestützt wird. Dadurch wird eine Verformung sowie eine Materialbelastung der Balgdichtung 5 aufgrund der Druckdifferenz diesseits und jenseits der Balgdichtung minimiert.

Eine Federeinrichtung 6 beaufschlagt den Ventilkörper 3 entlang seiner Bewegungslinie mit einer Federkraft und spannt den Ventilkörper 3 nach dem Prinzip eines Rückschlagventils oder Druckventils derart vor, dass der Ventilkörper 3 den Kühlmittelkanal 4 an der Mündung der Anschlussleitung 41 blockiert. Eine Federkraft der Federeinrichtung 6 ist derart ausgelegt, dass das Ventil 1 bei einem Kühlmitteldruck von 0,4 bar, was in etwa einer Kühlmitteltemperatur von 85°C entspricht, selbsttätig öffnet.

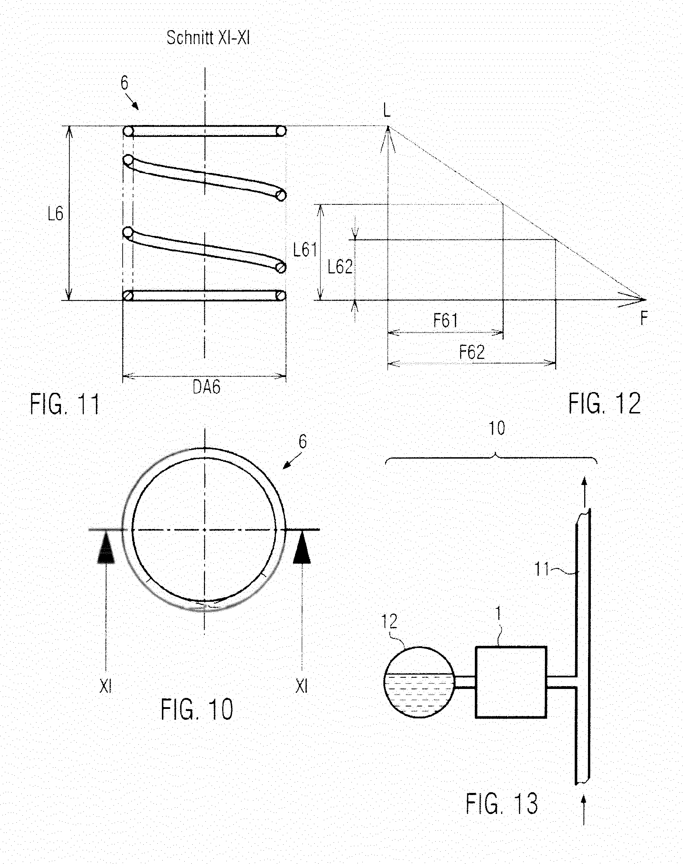

Eine Kraft (F) - Weg (L) - Kennlinie der Federeinrichtung 6 ist in Fig. 12 dargestellt. Die Federeinrichtung 6 ist als Druckfeder ausgebildet und umfasst im entspannten Zustand eine Länge L6 von bspw. 24,5 mm bei einem Außendurchmesser DA6 von ca. 23 mm und einer Drahtstärke von ca. 1,5 mm. Die Federeinrichtung 6 ist unter Vorspannung zwischen dem Gehäuse 2 und dem Ventilkörper 3 eingebaut, wobei die Federkraft F61 in der Verschlussstellung des Ventils 1 bei einer Federlänge L61 von 13 mm ca. 13 N beträgt und die Federkraft F62 in der Öffnungsstellung des Ventils 1 bei einer Federlänge L62 von ca. 8 mm ca. 27 N beträgt.

Fig. 13 ist eine schematische Darstellung eines erfindungsgemäßen Kühlsystem 10 eines Kraftfahrzeugs, umfassend einen Kühlmittelkreislauf 11 und einen Ausgleichsbehälter 12 zur Kompensation von Volumenänderungen des im Kühlmittelkreislauf 11 zirkulierenden Kühlmittels, wobei der Ausgleichsbehälter 12 vom Kühlmittelkreislauf 11 zumindest vorübergehend abkoppelbar ist. Die Fließrichtung des Kühlmittels im Kühlmittelkreislauf 11 ist durch Pfeile angezeigt. Zur Abkopplung des Ausgleichsbehälters 12 vom Kühlmittelkreislauf 11 kann das erfindungsgemäße Ventil 1 eingesetzt werden.

Nach dem erfindungsgemäßen Verfahren zum Betrieb des Kühlsystems 10 wird der Ausgleichsbehälter 12 in Abhängigkeit von einem Betriebszustand des Kraftfahrzeugs, vorzugsweise in Abhängigkeit der Kühlmitteltemperatur oder dem Kühlmitteldruck, vom Kühlmittelkreislauf 11 entkoppelt und/oder mit dem Kühlmittelkreislauf 11 gekoppelt. In einer Warmlaufphase des Motors wird der Ausgleichsbehälter 12 vorzugsweise in einem ersten Betriebszustand des Kraftfahrzeugs von dem Kühimittelkreislauf 11 entkoppelt und wird in einem zweiten Betriebszustand des Kraftfahrzeugs mit dem Kühlmittelkreislauf 11 gekoppeft.

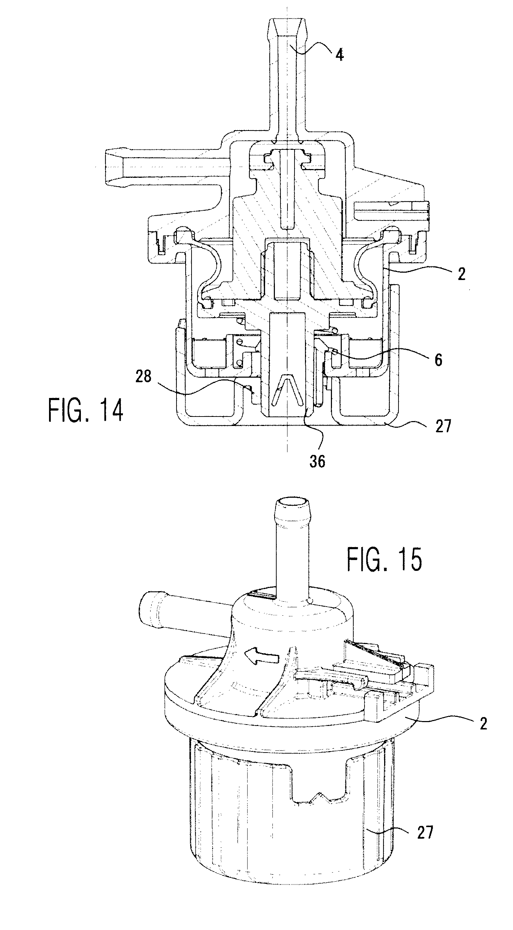

Figur 14 zeigt eine weitere Ausführungsform des erfindungsgemäßen Ventils. Der Ventilkörper 3 weist auf seiner von dem Kühlmittelkanal 4 abgewandten Seite einen Eingriffsabschnitt 36 mit einem Führungselement auf, das mit einer Rampe des Betätigungselements 27 zusammenwirkt. Die Rampe verläuft vergleichbar mit einer Gewindeflanke in Umfangsrichtung um die Drehachse des Betätigungselements 27 und weist dabei eine Steigung auf. Das Führungselement des Ventilkörpers 3 wird bei Drehung des Betätigungselements 27 um dessen Drehachse gleitend an der Rampe geführt und durch die Federkraft der Federeinrichtung 6 mit der Rampe in Eingriff gehalten. Die Rampe ist beidseitig durch Anschläge begrenzt und erstreckt sich beispielsweise über ca. eine halbe Umfangslänge bzw. einen Bereich von ca. 120° bis 180° um die Drehachse des Betätigungselements 27. In der Verschlussstellung des Ventils 1 befindet sich das Führungselement vorzugsweise an einem ersten Anschlag und in der Öffnungsstellung an einem zweiten Anschlag.

Das Betätigungselement 27 ist selbst in Topfform ausgebildet und überdeckt durch seine halboffene Gestalt das Gehäuse 2 des Ventils welches dem Kühlmittelkanal 4 gegenüberliegt, und liegt gleichzeitig mit einem Abschnitt 28 am Gehäuse 2 im Bereich des Eingriffsabschnitts 36 an. Das Betätigungselement 27 weist an seiner Außenseite eine regelmäßige Oberfläche auf, um für das manuelle Bedienen und Drehen eine Grifffläche auszubilden, wie es auch in der Figur 15 dargestellt ist.

Durch das Verdrehen des Betätigungselements 27 und den Eingriff zwischen der Rampe und dem Führungselement am Eingriffsabschnitt 36 des Ventilkörpers wird der Abschnitt 28 des Betätigungselements 27 mit einer Kraft gegen das Gehäuse 2 beaufschlagt. In der Folge bewirkt die Kraft, dass durch den Eingriff bei weiterem Verdrehen des Betätigungselements 27 der Eingriffsabschnitt 36 entgegen der Kraft der Feder 6 bewegt wird, wodurch der Ventilkörper 3 aus der Schließposition bewegt wird und den Kühlmittelkanal 4 freigibt. Durch die Ausbildung des Gewindeeingriffs zwischen dem Eingriffsabschnitt 36 und dem Betätigungselement 27 kann die notwendige Verdrehbewegung zum Abheben des Ventilkörpers 3 beliebig angepasst werden.

Bei der Konstruktion des erfindungsgemäßen Ventils für den Ausgleichsbehälter sind folgende Merkmale von besonderer Bedeutung: Bei herkömmlichen gattungsgemäßen Ventilen werden Faltenbälge eingesetzt. Diese unterliegen jedoch einem großen Verschleiß. Anstelle eines Faltenbalges wird ein Gummibalg verwendet, der im Querschnitt gesehen im Wesentlichen eine S-Krümmung aufweist. Bei der erfindungsgemäßen Lösung ergibt sich eine sehr sanfte Beanspruchung des vorzugsweise einwelligen Gummibalges. Wenn das Ventil öffnet, befindet sich der Balg in einer gestreckten Position. Der Ventilkörper liegt dabei vorzugsweise an einem Anschlag an. Der gestreckte Faltenbalg wird von dem Kühlmittel gegen die Wand des Ventilgehäuses gedrückt. Das Ventilgehäuse ist mit Luftlöchern versehen, so dass das Ventil automatisch in seine Ausgangsposition, die geschlossene Position bzw. Verschlussstellung, zurückgehen kann.

Weiterhin ist es von Vorteil, dass der Balg nicht geklebt ist. Stattdessen wird er kraft- und/oder formschlüssig am Ventilgehäuse und am Ventilkörper aufgenommen. Dies ist insbesondere von Bedeutung, da bei den bisherigen Lösungen Glykol die Verklebungen angegriffen hat.

Eine weitere Neuerung ist die Anordnung der Verschweißung zwischen einem topfförmigen Gehäuseunterteil und einem deckelförmigen Gehäuseoberteil. Die Verschweißung liegt dabei außerhalb des Balges. Das Problem der Schweißung ist üblicherweise die unterschiedliche Dichte zwischen den Kunststoffen im ungeschweißten und im geschweißten Bereich. Die unterschiedliche Dichte kann insbesondere bei Druck zu Problemen führen. Folglich ist es besonders vorteilhaft, dass die Schweißung vollständig außerhalb der Dichtung liegt.

Bevorzugte Weiterbildungen der Erfindung ergeben sich durch beliebige Kombinationen der in den Ansprüchen, in der Beschreibung und in den Zeichnungen offenbarten Merkmale.

### Bezugszeichen

| | |
|---|---|
| 1 | Ventil |
| 2 | Gehäuse |
| 3 | Ventilkörper |
| 4 | Kühlmittelkanal |
| 5 | Balgdichtung |
| 6 | Federeinrichtung |
| 10 | Kühlsystem |
| 11 | Kühlmittelkreislauf |
| 12 | Ausgleichsbehälter |
| 20 | Anschlag |
| 21 | Gehäuseteil (Deckel) |
| 22 | Gehäuseteil (Topf) |
| 23 | Aufnahmeabschnitt (Ringkammer) |
| 24 | Ringspalt |
| 25 | Öffnung |
| 26 | Markierung |
| 27 | Betätigungselement |
| 28 | Abschnitt |
| 31 | Teil des Ventilkörpers |
| 32 | Teil des Ventilkörpers |
| 33 | Teil des Ventilkörpers |
| 34 | Aufnahmeabschnitt (Ringkammer) |
| 35 | Ringspalt |
| 36 | Eingriffsabschnitt |
| 41 | Anschlussleitung (axial) |
| 42 | Anschlussleitung (radial) |
| 51 | Eingriffsabschnitt gehäuseseitig |
| 52 | Eingriffsabschnitt ventilkörperseitig |
| 53 | Balgabschnitt |
| 54 | Gelenkabschnitt gehäuseseitig |
| 55 | Gelenkabschnitt ventilkörperseitig |
| B51 | Breite/Dicke Eingriffsabschnitt gehäuseseitig |
| B52 | Breite/Dicke Eingriffsabschnitt ventilkörperseitig |
| B53 | Breite/Dicke Balgabschnitt |
| D2 | Durchmesser Gehäuse |
| D22 | Durchmesser Gehäuseteil (Topf) |
| DA6 | Außendurchmesser Federeinrichtung |
| DA52 | Außendurchmesser Eingriffsabschnitt ventilkörperseitig |
| DI51 | Innendurchmesser Eingriffsabschnitt gehäuseseitig |
| DI52 | Innendurchmesser Eingriffsabschnitt ventilkörperseitig |
| F61 | Federkraft in Öffnungsstellung des Ventils |
| F62 | Federkraft in Verschlussstellung des Ventils |
| L2 | Länge Gehäuse |
| L41 | Länge Anschlussleitung (axial) |
| L5 | Länge Balgdichtung |
| L51 | Länge Eingriffsabschnitt gehäuseseitig |
| L52 | Länge Eingriffsabschnitt ventilkörperseitig |
| L6 | Federlänge entspannt |
| L61 | Federlänge in Öffnungsstellung des Ventils |
| L62 | Federlänge in Verschlussstellung des Ventils |
| R51 | Radius Eingriffsabschnitt gehäuseseitig |
| R52 | Radius Eingriffsabschnitt ventilkörperseitig |

## Patentansprüche

1. Ventil (1) für ein Kühlsystem (10) eines Kraftfahrzeugs, umfassend ein Gehäuse (2), wenigstens einen Ventilkörper (3) und wenigstens einen Kühlmittelkanal (4), wobei das Ventil (1) zwischen einer Verschlussstellung, in welcher der Ventilkörper (3) den Kühlmittelkanal (4) versperrt, und einer Öffnungsstellung, in welcher der Ventilkörper (3) den Kühlmittelkanal (4) freigibt, überführbar ist, wobei der Ventilkörper (3) über eine flexible Balgdichtung (5) gegenüber dem Gehäuse (2) abgedichtet ist, **dadurch gekennzeichnet, dass** sich die flexible Balgdichtung (5) in der Öffnungsstellung des Ventils (1) an einem Anschlag (20) abstützt.

2. Ventil (1) für ein Kühlsystem (10) eines Kraftfahrzeugs, umfassend ein Gehäuse (2), wenigstens einen Ventilkörper (3) und wenigstens einen Kühlmittelkanal (4), wobei das Ventil (1) zwischen einer Verschlussstellung, in welcher der Ventilkörper (3) den Kühlmittelkanal (4) versperrt, und einer Öffnungsstellung, in welcher der Ventilkörper (3) den Kühlmittelkanal (4) freigibt, überführbar ist, wobei der Ventilkörper (3) über eine flexible Balgdichtung (5) gegenüber dem Gehäuse (2) abgedichtet ist, **dadurch gekennzeichnet, dass** die flexible Balgdichtung (5) kraftschlüssig und/oder formschlüssig am Gehäuse (2) und/oder am Ventilkörper (3) festgelegt ist.

3. Ventil (1) nach wenigstens einem der vorangehenden Ansprüche, **dadurch gekennzeichnet, dass** das Ventil (1) wenigstens eine der nachstehenden Anforderungen erfüllt:
a. Das Ventil (1) ist als Rückschlagventil oder Druckventil ausgebildet.
b. Das Ventil (1) ist durch manuelle Betätigung zwischen der Verschlussstellung und der Öffnungsstellung überführbar.

4. Ventil (1) nach wenigstens einem der vorangehenden Ansprüche, **dadurch gekennzeichnet, dass** das Gehäuse (2) wenigstens eine der nachstehenden Anforderungen erfüllt:
a. Das Gehäuse (2) besteht aus wenigstens zwei Gehäuseteilen (21, 22), wobei vorzugsweise wenigstens ein Gehäuseteil (22) im Wesentlichen topfförmig ausgebildet ist und/oder wenigstens ein Gehäuseteil (21) im Wesentlichen deckelförmig ausgebildet ist.
b. Wenigstens zwei Gehäuseteile (21, 22) sind miteinander verschweißt, wobei eine Schweißnaht der Gehäuseteile (21, 22) vorzugsweise vollständig außerhalb der Balgdichtung (5) liegt, wobei die Schweißnaht bevorzugt als Ringschweißnaht ausgebildet ist.
c. Das Gehäuse (2) umfasst wenigstens einen Aufnahmeabschnitt (23) zur kraft- und/oder formschlüssigen Aufnahme wenigstens eines Eingriffsabschnitts (51) der Balgdichtung (5), wobei der Aufnahmeabschnitt (23) vorzugsweise durch wenigstens zwei Gehäuseteile (21, 22) gebildet wird und/oder als Ringkammer (23) ausgebildet ist, wobei die Ringkammer (23) besonders bevorzugt über einen Ringspalt (24) zugänglich ist.
d. Das Gehäuse (2) umfasst wenigstens eine Öffnung (25), durch welche ein Medium, das beim Überführen des Ventils (1) von der Verschlussstellung in die Öffnungsstellung von der Balgdichtung (5) verdrängt wird, aus einem Innenraum des Gehäuses (2) entweichen kann, und beim Überführen des Ventils (1) von der Öffnungsstellung in die Verschlussstellung in den Innenraum des Gehäuses (2) zurückströmen kann.
e. Das Gehäuse (2) umfasst wenigstens zwei Anschlussleitungen (41, 42) zum Anschließen des Kühlmittelkanals (4) an eine Kühlmittelleitung und/oder einen Kühlmittelbehälter, wobei vorzugsweise wenigstens eine Anschlussleitung (41) im Wesentlichen in axialer Richtung des Gehäuses (2) in den Kühlmittelkanal (4) mündet und/oder wenigstens eine Anschlussleitung (42) im Wesentlichen in radialer Richtung des Gehäuses (2) in den Kühlmittelkanal (4) mündet, wobei bevorzugt wenigstens zwei Anschlussleitungen (41, 42) in demselben Gehäuseteil (21) vorgesehen sind, wobei besonders bevorzugt die Anschlussleitung (41), die im Wesentlichen in axialer Richtung des Gehäuses (2) in den Kühlmittelkanal (4) mündet, koaxial zu einer Gehäuseachse ausgerichtet ist.
f. Das Gehäuse (2) ist im Wesentlichen zylindrisch und/oder rotationssymmetrisch ausgebildet.
g. Das Gehäuse (2) bildet den Anschlag (20) für die Balgdichtung (5), wobei sich der Anschlag (20) vorzugsweise an einer Innenwand eines Gehäuseteils, bevorzugt einer Innenwand des topfförmigen Gehäuseteils (22) befindet.

5. Ventil (1) nach wenigstens einem der vorangehenden Ansprüche, **dadurch gekennzeichnet, dass** der Ventilkörper (3) wenigstens eine der nachstehenden Anforderungen erfüllt:
a. Der Ventilkörper (3) ist bewegbar im Gehäuse (2) aufgenommen.
b. Der Ventilkörper (3) ist entlang einer geraden Bewegungslinie (31) zwischen der Verschlussstellung und der Öffnungsstellung des Ventils (2) bewegbar.
c. Die Bewegungslinie (31) des Ventilkörpers (3) verläuft entlang einer Gehäuseachse.
d. Der Ventilkörper (3) besteht aus wenigstens zwei Teilen (31, 32, 33), die vorzugsweise rotationssymmetrisch ausgebildet und bevorzugt entlang einer Gehäuseachse ausgerichtet sind.
e. Der Ventilkörper (3) umfasst wenigstens einen Aufnahmeabschnitt (34) zur kraft- und/oder formschlüssigen Aufnahme wenigstens eines Eingriffsabschnitts (52) der Balgdichtung (5), wobei der Aufnahmeabschnitt (34) vorzugsweise durch wenigstens zwei Teile (32, 33) des Ventilkörpers (3) gebildet wird und/oder als Ringkammer (34) ausgebildet ist, wobei die Ringkammer (34) besonders bevorzugt über einen Ringspalt (35) zugänglich ist.
f. Der Ventilkörper (3) umfasst einen Eingriffsabschnitt (36), der auf der von dem Kühlmittelkanal (4) abgewandten Seite der Balgdichtung (5) aus dem Inneren des Gehäuses (2) nach außen hervorsteht und sich mit einem Betätigungselement (27) zur manuellen Betätigung des Ventilkörpers (3) im Eingriff befindet.

6. Ventil (1) nach wenigstens einem der vorangehenden Ansprüche, **dadurch gekennzeichnet, dass** das Ventil (1) ein Betätigungselement (27) aufweist, um das Ventil (1) durch manuelle Betätigung zwischen der Verschlussstellung und der Öffnungsstellung zu überführen, wobei das Betätigungselement (27) vorzugsweise wenigstens eine der nachstehenden Anforderungen erfüllt:
a. Das Betätigungselement (27) ist außen am Gehäuse (2) angeordnet.
b. Das Betätigungselement (27) ist drehbar am Gehäuse (2) gelagert.
c. Das Betätigungselement (27) ist im Wesentlichen hohlzylindrisch ausgebildet und ist auf einen zylindrischen Teil des Gehäuses (2) aufgesetzt.
d. Das Betätigungselement (27) ist mit dem Ventilkörper (3) derart gekoppelt, dass der Ventilkörper (3) durch Betätigung des Betätigungselements (27) bewegbar ist.
e. Das Betätigungselement (27) ist mit dem Ventilkörper (3) derart gekoppelt, dass eine Drehbewegung des Betätigungselements (27) in eine lineare Hubbewegung des Ventilkörpers (3) überführt wird.
f. Das Betätigungselement (27) befindet sich mit dem Ventilkörper (3) in einem Gewindeeingriff.

7. Ventil (1) nach wenigstens einem der vorangehenden Ansprüche, **dadurch gekennzeichnet, dass** der Kühlmittelkanal (4) wenigstens eine der nachstehenden Anforderungen erfüllt:
a. Der Kühlmittelkanal (4) erstreckt sich durch das Gehäuse (2).
b. Der Kühlmittelkanal (4) kommuniziert mit den Anschlussleitungen (41, 42).

8. Ventil (1) nach wenigstens einem der vorangehenden Ansprüche, **dadurch gekennzeichnet, dass** die Balgdichtung (5) wenigstens eine der nachstehenden Anforderungen erfüllt:
a. Die Balgdichtung (5) umfasst wenigstens einen gehäuseseitigen Eingriffsabschnitt (51), durch welchen die Balgdichtung (5) kraft- und/oder formschlüssig am Gehäuse (2) festgelegt ist, wobei der gehäuseseitige Eingriffsabschnitt (51) vorzugsweise als Ringwulst ausgebildet ist und bevorzugt axial und/oder radial bezogen auf eine Mittelachse der Balgdichtung (5) in Richtung des Gehäuses (2) vorsteht.
b. Die Balgdichtung (5) umfasst wenigstens einen ventilkörperseitigen Eingriffsabschnitt (52), durch welchen die Balgdichtung (5) kraft- und/oder formschlüssig am Ventilkörper (3) festgelegt ist, wobei der ventilkörperseitige Eingriffsabschnitt (52) vorzugsweise als Ringwulst ausgebildet ist und bevorzugt axial und/oder radial bezogen auf eine Mittelachse der Balgdichtung (5) in Richtung des Ventilkörpers (3) vorsteht.
c. Die Balgdichtung (5) umfasst wenigstens einen verformbaren Balgabschnitt (53), der beim Überführen des Ventils (1) zwischen der Verschlussstellung und der Öffnungsstellung verformt wird, wobei der Balgabschnitt (53) vorzugsweise in der Verschlussstellung des Ventils (1) vom Anschlag (20) beabstandet ist und sich in der Öffnungsstellung des Ventils (1) entgegen der Verformungsrichtung beim Überführen des Ventils (1) von der Verschlussstellung in die Öffnungsstellung am Anschlag (20) abstützt, wobei der Balgabschnitt (53) besonders bevorzugt in der Verschlussstellung des Ventils (1) eine ringförmige Einschnürung bildet und/oder in der Öffnungsstellung des Ventils (1) der Kontur des Anschlags (20) folgt.
d. Die Balgdichtung (5) umfasst wenigstens einen gehäuseseitigen Gelenkabschnitt (54), der den gehäuseseitigen Eingriffsabschnitt (51) und den Balgabschnitt (53) gelenkig verbindet, wobei der gehäuseseitige Gelenkabschnitt (54) vorzugsweise als ringförmiges Festkörpergelenk ausgebildet ist und bevorzugt im Bereich eines Ringspalts (24) des Gehäuses (2) angeordnet ist.
e. Die Balgdichtung (5) umfasst wenigstens einen ventilkörperseitigen Gelenkabschnitt (55), der den ventilkörperseitigen Eingriffsabschnitt (52) und den Balgabschnitt (53) gelenkig verbindet, wobei der ventilkörperseitige Gelenkabschnitt (55) vorzugsweise als ringförmiges Festkörpergelenk ausgebildet ist und bevorzugt im Bereich eines Ringspalts (35) des Ventilkörpers (3) angeordnet ist.
f. Die Balgdichtung (5) weist im Schnitt entlang der Balgachse im Wesentlichen ein S-förmiges Wandprofil auf, wobei vorzugsweise das radial nach außen gerichtete Ende des S-Profils den gehäuseseitigen Eingriffsabschnitt (51) bildet und der radial nach innen gerichtete Schenkel des S-Profils den ventilkörperseitigen Eingriffsabschnitt (52) bildet.
g. Die Balgdichtung (5) ist im Wesentlichen ringförmig oder rohrförmig oder schlauchförmig ausgebildet.
h. Die Balgdichtung (5) ist aus Gummi gefertigt.
i. Die Balgdichtung (5) ist als einwelliger Balg ausgebildet.
j. Die Balgdichtung (5) befindet sich in der Verschlussstellung des Ventils (1) in einem unverformten Zustand.
k. In der Öffnungsstellung des Ventils (1) liegt der Balgabschnitt (53) zumindest über die Hälfte seiner axialen Länge, vorzugsweise über mehr als zwei Drittel seiner axialen Länge, bevorzugt über mehr als drei Viertel seiner axialen Länge, besonders bevorzugt vollumfänglich und/oder vollflächig am Anschlag (20) an.
l. Die Balgdichtung (5) ist einstückig ausgebildet.
m. Die Balgdichtung (5) ist in der Verschlussstellung des Ventils (1) von dem Anschlag (20) beabstandet.

9. Ventil (1) nach wenigstens einem der vorangehenden Ansprüche, **dadurch gekennzeichnet, dass** eine Federeinrichtung (6) den Ventilkörper (3) mit einer Federkraft beaufschlagt, wobei die Federeinrichtung (6) wenigstens eine der nachstehenden Anforderungen erfüllt:
a. Die Federeinrichtung (6) spannt den Ventilkörper (3) derart vor, dass der Ventilkörper (3) den Kühlmittelkanal (4) blockiert.
b. Die Federeinrichtung (6) beaufschlagt den Ventilkörper (3) entlang seiner Bewegungslinie (31) mit einer Federkraft.
c. Eine Federkraft der Federeinrichtung (6) ist derart ausgelegt, dass das Ventil (1) bei einem Kühlmitteldruck selbsttätig öffnet.

10. Kühlsystem (10) eines Kraftfahrzeugs, umfassend einen Kühlmittelkreislauf (11) und einen Ausgleichsbehälter (12) zur Kompensation von Volumenänderungen des im Kühlmittelkreislauf (11) zirkulierenden Kühlmittels, **dadurch gekennzeichnet, dass** der Ausgleichsbehälter (12) vom Kühlmittelkreislauf (11) zumindest vorübergehend abkoppelbar ist, wobei zur Abkopplung des Ausgleichsbehälters (12) vom Kühlmittelkreislauf (11) vorzugsweise das Ventil (1) nach wenigstens einem der vorangehenden Ansprüche eingesetzt wird.

11. Verfahren zum Betrieb des Kühlsystems (10) eines Kraftfahrzeugs nach Anspruch 9, **dadurch gekennzeichnet, dass** der Ausgleichsbehälter (12) in Abhängigkeit von einem Betriebszustand des Kraftfahrzeugs, vorzugsweise in Abhängigkeit der Kühlmitteltemperatur oder dem Kühlmitteldruck, vom Kühlmittelkreislauf (11) entkoppelt und/oder mit dem Küh(mittelkreislauf (11) gekoppelt wird, wobei der Ausgleichsbehälter (12) vorzugsweise in einem ersten Betriebszustand des Kraftfahrzeugs von dem Kühlmittelkreislauf (11) entkoppelt wird und in einem zweiten Betriebszustand des Kraftfahrzeugs mit dem Kühlmittelkreislauf (11) gekoppelt wird.
